# NEW EUROPEAN PATENT SPECIFICATION

(11) **EP 1 309 926 B2**
(45) Date of publication and mention of the opposition decision: **03.06.2015**
(45) Mention of the grant of the patent: 05.07.2006
(21) Application number: 02739716.5
(22) Date of filing: 06.06.2002
(51) Int. Cl.: G06F 17/00, G06F 1/00

(54) **METHOD AND SYSTEM FOR SUBSCRIPTION DIGITAL RIGHTS MANAGEMENT**
VERFAHREN UND SYSTEM ZUR VERWALTUNG VON DIGITALEN ABONNEMENTRECHTEN
PROCEDE ET SYSTEME PERMETTANT DE GERER DES DROITS NUMERIQUES D'ABONNEMENT

(30) Priority: 07.06.2001 US 296114 P
(43) Date of publication of application: 14.05.2003
(73) Proprietor: ContentGuard Holdings, Inc., Plano TX 75024 (US)
(72) Inventor: LAO, Guillermo, Torrance, CA 90503 (US)
(74) Representative: Grünecker Patent- und Rechtsanwälte PartG mbB
(86) International application number: PCT/US2002/017851
(87) International publication number: WO 2002/101577

(56) References cited:
- WO-A-00/72118
- WO-A-99/60461
- US-A- 5 745 879
- US-A- 5 745 879
- US-A- 5 917 912
- US-B1- 6 169 976
- US-B1- 6 189 146
- US-B1- 6 216 112
- US-B1- 6 219 652

## Description

The present invention is directed to a subscription digital rights management system and a method thereof. In particular, the present invention is directed to such a system and method that facilitates subscription to plural protected items, such as digital content.

One of the most important issues impeding the widespread distribution of digital works (i.e. documents or other content in forms readable by computers), via electronic means, and the Internet in particular, is the current lack of ability to enforce the intellectual property rights of content owners during the distribution and use of digital works. Efforts to resolve this problem have been termed "Intellectual Property Rights Management" ("IPRM"), "Digital Property Rights Management" ("DPRM"), "Intellectual Property Management" ("IPM"), "Rights Management" ("RM"), and "Electronic Copyright Management" ("ECM"), collectively referred to as "Digital Rights Management (DRM)" herein. There are a number of issues to be considered in effecting a DRM System. For example, authentication, authorization, accounting, payment and financial clearing, rights specification, rights verification, rights enforcement, and document protection issues should be addressed. U.S. patents 5,530,235, 5,634,012, 5,715,403, 5,638,443, and 5,629,980, disclose DRM systems addressing these issues.

In the world of printed documents and other physical content, a work created by an author is usually provided to a publisher, which formats and prints numerous copies of the work. The copies are then sent by a distributor to bookstores or other retail outlets, from which the copies are purchased by end users. While the low quality of copying and the high cost of distributing printed material have served as deterrents to unauthorized copying of most printed documents, it is far too easy to copy, modify, and redistribute unprotected digital works with high quality. Accordingly, mechanisms of protecting digital works are necessary to retain rights of the owner of the work.

Unfortunately, it has been widely recognized that it is difficult to prevent, or even deter, people from making unauthorized copies of electronic works within current general-purpose computing and communications systems such as personal computers, workstations, and other devices connected over communications networks, such as local area networks (LANs), intranets, and the Internet. Many attempts to provide hardware-based solutions to prevent unauthorized copying have proven to be unsuccessful. The proliferation of high band-width "broadband" communications technologies and the development of what is presently known as the "National Information Infrastructure" (Nll) will render it even more convenient to distribute large documents electronically, including video files such as full length motion pictures, and thus will remove any remaining deterrents to unauthorized copying and distribution of digital works. Accordingly, DRM technologies are becoming a high priority.

Two basic DRM schemes have been employed, secure containers and trusted systems. A "secure container" (or simply an encrypted document) offers a way to keep document contents encrypted until a set of authorization conditions are met and some copyright terms are honored (e.g., payment for use). After the various conditions and terms are verified with the document provider, the document is released to the user in clear form. Commercial products such as CRYPTOLOPES™ and DIGIBOXES™ fall into this category. Clearly, the secure container approach provides a solution to protecting the document during delivery over insecure channels, but does not provide any mechanism to prevent legitimate users from obtaining the clear document and then using and redistributing it in violation of content owners' intellectual property.

In the "trusted system" approach, the entire system is responsible for preventing unauthorized use and distribution of the document. Building a trusted system usually entails introducing new hardware such as a secure processor, secure storage and secure rendering devices. This also requires that all software applications that run on trusted systems be certified to be trusted. While building tamper-proof trusted systems is a real challenge to existing technologies, current market trends suggest that open and untrusted systems, such as PC's and workstations using browsers to access the Web, will be the dominant systems used to access digital works. In this sense, existing computing environments such as PC' s and workstations equipped with popular operating systems (e.g., Windows™, Linux™, and UNIX) and rendering applications, such as browsers, are not trusted systems and cannot be made trusted without significantly altering their architectures. Of course, alteration of the architecture defeats a primary purpose of the Web, i.e. flexibility and compatibility.

U.S. patent 5,634,012 discloses a system for controlling the distribution of digital documents. Each rendering device has a repository associated therewith. A predetermined set of usage transaction steps define a protocol used by the repositories for enforcing usage rights associated with a document. Usage rights persist with the document content. The usage rights can permit various manners of use such as, viewing only, use once, distribution, and the like. Usage rights can be contingent on payment or other conditions.

Conventional DRM systems typically provide access to protected content after a transaction in which an end user obtains a license allowing access to the protected content. Thus, conventional DRM systems utilize a "per-transaction" model where each access to the protected content requires a separate transaction with a separate license. In this regard, conventional DRM systems can become very cumbersome when a user expects to access a large number of items of protected content since a transaction must be made for each item accessed.

US-A-5 917 912 discloses a system and methods for electronic rights protection. A user rights table in the example embodiment provides permissioning and other information specific to particular users or groups of users and object combinations set forth in subject table 462. Permission records 808 may provide a universe of permissioning for a particular object-user combination. According to another embodiment, a repository has two major functional areas: a content system and a clearinghouse system. The content system is comprised of a user/author registration system, a content catalog, a search mechanism, content storage, content references, and a shipping system comprised of a controls packager, a container packager, and a transaction system. According to an example where "rules and controls" are used, the "events process" 402 detects things that happen and determine which of those "events" need action by the other "processes". Whether an "event" needs more processing depends on the "rules and controls" corresponding to the content. According to another embodiment, an end user requests content from the VDE repository (e.g. by selecting from a menu of available options), the content system 3302A locates the content either in the content references and/or in content storage. The content system 3302A may then refer to information stored in the content catalog 3322, the end user's account profile, and/or the author's account profile to determine the precise nature of container format and/or control information that may be required to create a VDE content container to fulfil the end user's request. According to another aspect, ROS services provided using a host processor 654 and/or a secure processor (SPU 500) are linked in the preferred embodiment using a "remote procedure call" internal processing request structure.

EP 0 715 244 A1 discloses a system for controlling the distribution and use of digital works utilizing a usage rights grammar. A usage transaction between two repositories enforces the usage rights. The usage transaction is performed after trust is established between both repositories. To establish the trust, certificates with public keys are used, which are provided to the repositories by a master repository.

It is the object of the present invention to provide an improved rights management system and a corresponding method for managing use of items having usage rights associated therewith.

This object is solved by the subject matter of the independent claims 1 and 13.

Preferred embodiments are defined by the subject matter of the dependent claims.

A first aspect of the invention is a DRM system for distributing items having usage rights associated therewith in accordance with one embodiment of the present invention comprising an activation device adapted to issue a software package that enforces usage rights to control use of the items, the software package having a public and private key pair, the public key being associated with a user, a license device adapted to issue a license having usage rights associated with at least one item, a usage device adapted to receive the software package, receive the license associated with the at least one item, and allow the user to access the at least one item in accordance with the license, and a subscription managing device adapted to maintain a subscription list including the public key associated with the user, where the license is issued by the license device upon verifying presence of the public key in the subscription list.

A second aspect of the present invention is a method for distributing items having usage rights associated therewith, the method comprising the steps of providing a software package to at least one user, the software package enforcing usage rights to control use of the items and having a private key and a public key associated with the at least one user, storing the public key associated with the at least one user in a subscription list, receiving a request from the at least one user to access the at least one item, verifying that the at least one user requesting access to the at least one item is listed in the subscription list, and issuing a license that grants usage rights to the at least one user to use the at least one item.

Fig. 1 is a schematic illustration of a DRM system adapted to a pertransaction model;

Fig. 2 is a schematic illustration of a rights label of the preferred embodiment;

Fig. 3 is a schematic illustration of a license of the preferred embodiment;

Fig. 4 is a schematic illustration of a DRM system in accordance with an embodiment of the present invention that provides subscription access to protected content; and

Fig. 5 is a flow chart of a method of the preferred embodiment.

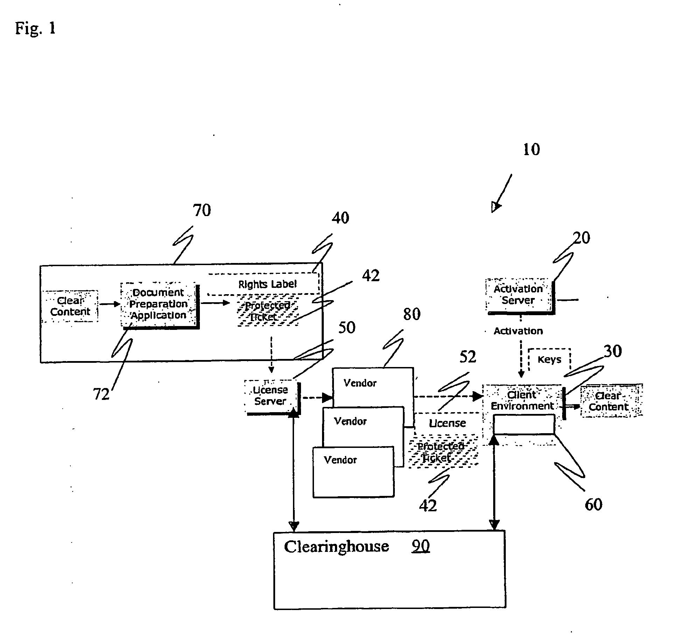

A DRM System can be utilized to specify and enforce usage rights for items, such as digital content, services, or goods - property. Fig. 1 illustrates DRM system 10 that can be used to distribute digital content. DRM System 10 includes a user activation component, in the form of activation server 20, that issues public and private key pairs to content users in a protected fashion, as is well known.

Typically, when a user uses DRM System 10 for the first time, the user is activated. During an activation process, some information is exchanged between activation server 20 and a device associated with the user, such as client environment 30, and client component 60 is downloaded and installed in client environment 30. Client component 60 preferably is tamper resistant and contains the set of public and private keys issued by activation server 20 as well as other components such as any necessary engine for parsing or rendering protected items such as protected content 42.

Rights label 40 is associated with protected content 42 and specifies usage rights that are available to an end-user when corresponding conditions are satisfied. Protected content 42 specifies a specific item as described below. License server 50 manages the encryption keys and issues licenses 52 for exercise of rights in the manner set forth below. Licenses 52 embody the actual granting of rights to an end user. For example, license 52 may permit a user to view protected content 42 for a fee of five dollars. Client component 60 interprets and enforces the rights that have been specified in license 52.

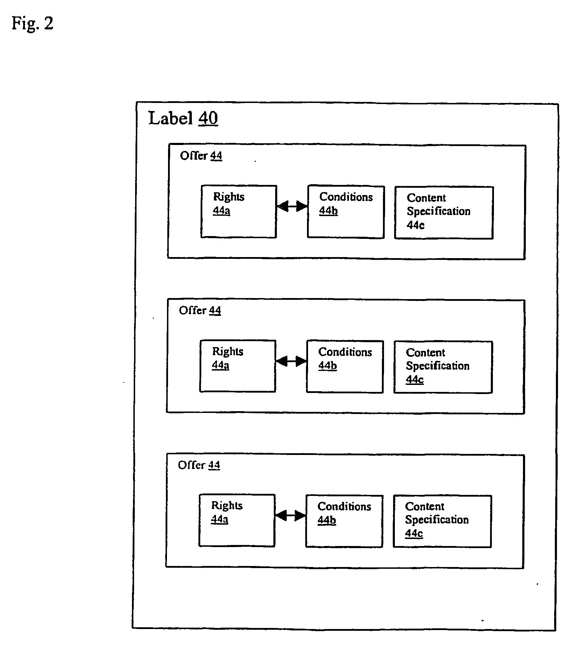

Fig. 2 illustrates rights label 40 in accordance with the preferred embodiment. Rights label 40 includes plural rights offers 44. Each rights offer 44 includes usage rights 44a, conditions 44b, and content specification 44c. Content specification 44c can include any mechanism for referencing, calling, locating, or otherwise specifying content 42 associated with rights offer 44.

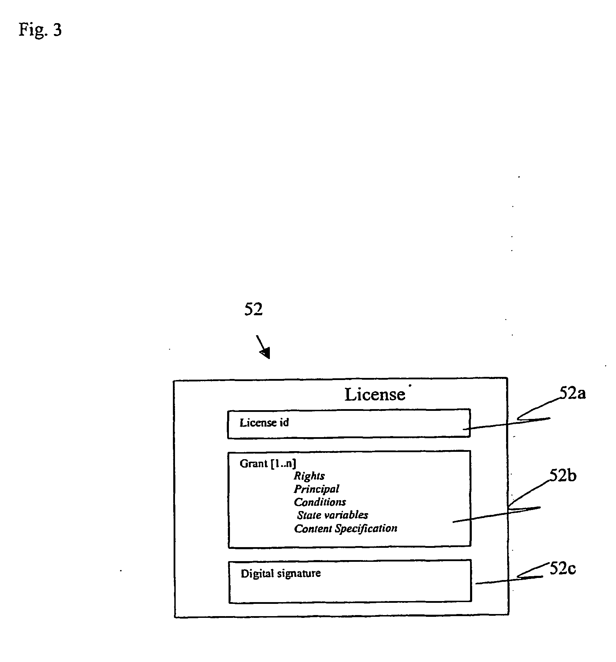

Fig. 3 illustrates license 52 in accordance with the preferred embodiment. License 52 includes a unique license ID 52a, grant 52b (including usage rights, a principal, conditions, and state variables) and a content specification designating content 42 associated with license 52. License 52 also includes digital signature 52c including any cryptographic keys or the like for unlocking item ticket 42.

Usage rights specify manners of use. For example, a manner of use can include the ability to use an item in a specified way such as to print, copy, view, or the like. Rights can also be bundled. Further, usage rights can specify transfer rights, such as distribution rights. In some cases conditions must be satisfied in order to exercise the manner of use in a specified usage right. For, example a condition may be the payment of a fee, submission of personal data, or any other requirement desired before permitting exercise of a manner of use. Conditions can also be "access conditions" for example, access conditions can apply to a particular group of users, say students in a university, or members of a book club. In other words, the condition is that the user is a particular person or member of a particular group. Rights and conditions can exist as separate entities or can be combined.

State variables track potentially dynamic states conditions. State variables are variables having values that represent status of an item, usage rights, license or other dynamic conditions. State variables can be tracked, by clearinghouse 90 or another device, based on identification mechanisms in license 52 and ticket 42. Further, the value of state variables can be used in a condition. For example, a usage right can be the right to redeem item ticket 42 for specified goods and a condition can be that the usage right can be exercised three times. Each time the usage right is exercised, the value of the state variable is incremented. In this example, when the value of the state variable is three, the condition is not longer satisfied and ticket 42 cannot be redeemed. Another example of a state variable is time. A condition of license 52 may require that item ticket 42 is redeemed within thirty days. A state variable can be used to track the expiration of thirty days. Further, the state of a usage right can be tracked as a collection of state variables. The collection of the change is the state of a usage right represents the usage history of that right.

Protected content 42 can be prepared with document preparation application 72 installed on computer 70 associated with the distributor of content, a content service provider, or any other party. Preparation of protected content 42 consists of specifying the rights and conditions under which protected content 42 can be used by associating rights label 40 with protected content 42 and protecting protected content 42 with some crypto algorithm or other mechanism for preventing processing or rendering of protected content 42. A rights language such as XrML™ can be used to specify the rights and conditions in rights label 40. However, the rights and conditions can be specified in any manner. Accordingly, the process of specifying rights refers to any process for associating rights with protected content 42. Rights label 40 associated with protected content 42 and the encryption key used to encrypt protected content 42 can be transmitted to license server 50. Protected content 42 can be a text file an audio file, a video file, a digital multimedia file, or any other digital content.

A typical workflow for DRM System 10 is described below. A user operating within client environment 30 is activated for receiving protected content 42 by activation server 20. This results in a public-private key pair (and possibly some user/machine specific information) being downloaded to client environment 30 in the form of client software component 60 in a known manner. This activation process can be accomplished at any time prior to the issuing of a license.

When a user wishes to obtain a specific protected content 42, the user makes a request for the protected content 42. For example, a user might browse a Web site running on Web server of vendor 80, using a browser installed in client environment 30, and request an item corresponding to protected content 42. The user can examine rights offers 44 in rights label 40 associated with protected content 42 and select the desired usage rights. During this process, the user may go through a series of steps possibly to satisfy conditions of the usage rights including a fee transaction or other transactions (such as collection of information). When the appropriate conditions and other prerequisites, such as the collection of a fee and verification that the user has been activated, are satisfied, vendor 80 contacts license server 50 through a secure communications channel, such as a channel using a Secure Sockets Layer (SSL). License server 50 then generates license 52 for protected content 42 and vendor 80 causes both protected content 42 and license 52 to be downloaded. License 52 includes the usage rights selected and can be downloaded from license server 50 or an associated device. Protected content 42 can be downloaded from computer 70 associated with a vendor, distributor, or other party.

Client component 60 in client environment 30 will then proceed to interpret license 52 and allow the use of protected content 42 based on the rights and conditions specified in license 52. The interpretation and enforcement of usage rights and related systems and techniques are well known. The steps above may take place sequentially or approximately simultaneously or in various sequential order.

DRM System 10 addresses security aspects of protected contents 42. In particular, DRM System 10 may authenticate license 52 that has been issued by license server 50. One way to accomplish such authentication is for application 60 to determine if licenses 52 can be trusted. In other words, application 60 has the capability to verify and validate the cryptographic signature, or other identifying characteristic of license 52. Of course, the example above is merely one way to effect a DRM System. For example, license 52 and protected content 42 can be distributed from different entities. Clearinghouse 90 can be used to process payment transactions and verify payment prior to issuing a license.

DRM systems such as the one described above provide access to protected items, such as protected content, after activation in which an end user obtains software and a license to access the protected content. A license is issued, and thus an exchange of keys or other identifying mechanisms must be accomplished, for each item of protected content. This per-transaction model can become cumbersome when a user expects to access and use a large number of items of protected content since a license must be generated for each protected content. In contrast, the DRM system and method in accordance with the preferred embodiment is implemented using a subscription model to provide automated user access to a collection of protected content without necessitating activation of a license for each protected content accessed.

It should be initially noted that the term "subscription" is used in a generic sense and includes any item, such as protected content, that a user is allowed to access. The subscription could involve delivery of an electronic document, or delivery of a means to obtain a hard copy document or other goods or services. For example, subscriptions may be periodicals, monthly bills or banks statements or access to a streaming media service. Subscription may also be subscriptions to tickets or other vouchers which are used to access or obtain other content, resources, physical goods or service.

In addition, it should be understood that whereas terms "server" and "client" are used below to describe the devices for implementing the present invention in the embodiment discussed herein, these terms should be broadly understood to mean any appropriate device for executing the function described. For instance, a personal computer, laptop, PDA or other hand held device, PDAs, or any other general purpose programmable computer, or combination of such devices, such as a network of computers may be used.

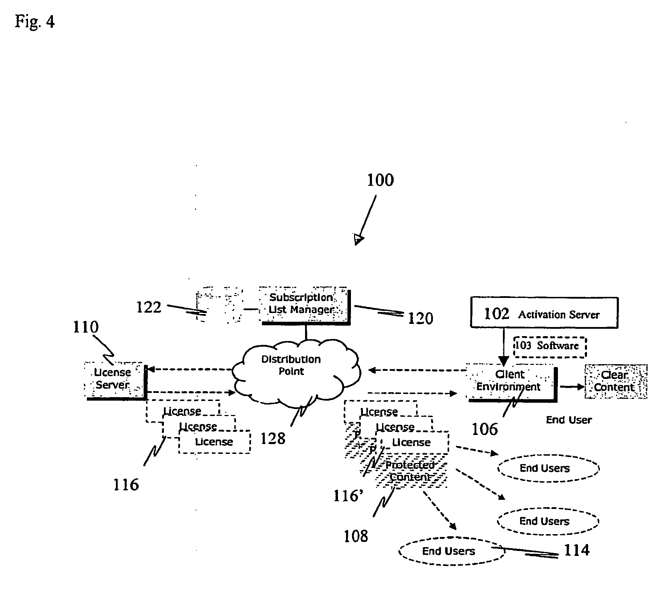

DRM system 100 in accordance with an embodiment of present invention is illustrated in Fig. 4. DRM system 100 that allows subscription based use of items, such as protected content 108. Because items of protected content 108 are encrypted or otherwise protected, they cannot be used by end users 114 without licenses 116 and software package 103 as a security component. DRM system 100 includes an activation device such as activation server 102 that is adapted to issue software package 103 to a usage device such as client 106 to allow one or more end users 114 to use a plurality of items of protected content 108. Activation server 102 of the DRM system 100 provides a public and private key pair to client 106, each of the end users 114 having at least a public key associated therewith.

DRM system 100 also includes a license device, such as license server 110, that is adapted to issue licenses 116 having usage rights which are associated with plurality of protected content 108. These licenses 116 define the end user's rights regarding a particular item of protected content 108. Requests for licenses 116 from license server 110 are made by distribution point 128 based on requests of end users 114 via client 106. A separate client device can be associate with each end user 114 or end users 114 can use a common client device. License 116 allows authorized end users 114 to access and use protected content 103. When license server 110 issues requested licenses 116', distribution point 128 pre-packages licenses 116' with the appropriate protected content 108 so that licenses 116' are matched to protected content 108 as shown in Fig. 4. When pre-packaged, licenses 116' can be a part of protected content 108 in the manner shown in Fig. 4. However, licenses 116' may also be a separate file or other component with a mechanism to associate the license to the appropriate protected content. For example, a link, a reference, a call or other association mechanism can be used. Client 106 receives software 103 package from activation server 102, receives protected content 108 with license 116' associated thereto in a pre-packaged form from distribution point 128, and allows one or more end users 114 to access protected content 108 for which the end user is authorized.

In the subscription based implementation, DRM system 100 allows end users 114 to access a plurality of protected content 108 without necessitating a separate activation for each item of protected content. In particular, DRM system 100 is adapted to be operated in subscription based manner and to provide subscribing end users 114 access to a plurality of items of protected content 108 without requiring further activations by activation server 102 and the corresponding delay and overhead.

DRM system 100 of the present embodiment is provided with a subscription managing device such as subscription list manager 120 that is adapted to recognize the identity of each end user 114 by maintaining a subscription list of public keys associated to each of subscribing end user 114. Subscription list manager 120 of the illustrated embodiment is also provided with database 122 for storing such identity information and public key information associated with end users 114. By having a subscription list and comparing the utilized public key with the public keys in the subscription list, DRM system 100 knows the identity of the subscribing end users 114 seeking to access and use specific protected content. When distribution point 128 requests a license on behalf of a particular end user who is a subscriber, the public key associated with the particular end user is extracted from the stored list in database 122 by subscription list manager 120 and the public key is used by license server 110 to issue the requisite license.

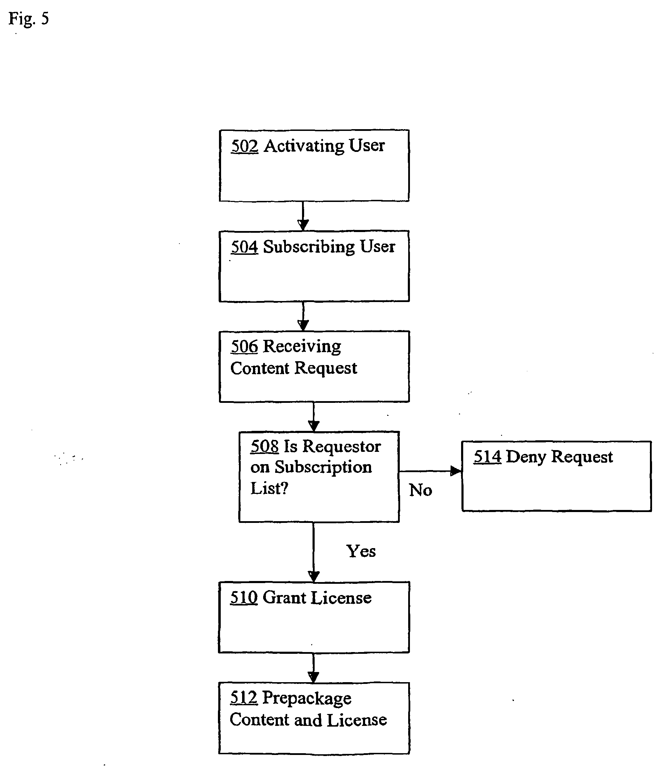

In the illustrated embodiment of Fig. 4, DRM system 100 would be used in the following manner to affect the method illustrated in Fig. 5. First, end users 114 utilize client environment 106 to be activated by server 102 in the manner described above (step 502). End users 114 join a subscription that is offered through a distribution point 128 which can be implemented as an application through a web site, an online store, or in another appropriate manner in step 504. During the process of joining a subscription, a series of steps may be provided to create an account or arrange payment of a fee in any appropriate manner. The details of the creation of the account or payment of the fee can be accomplished using known user interfaces and known APls, or the likes and thus, is not discussed in further detail herein.

After receiving a request for content in step 506, distribution point 128 retrieves the public keys that are associated with each end user 114, requesting protected content 108, the public keys being obtained during the activation process from activation server 102. The public keys identify end users and are stored in database 122 in correspondence with the associated end user and other associated data. When protected content 108 is to be distributed to subscribing end users 114, for instance through e-mail, distribution point 128 makes requests to license server 110 to issue the appropriate licenses. Requests for licenses may include a list of end users, their respective public encryption keys, and the protected content ID for which the licenses are to be issued. Of course, the request could also be for licensing a single end user or multiple protected content as well. The request for licenses may be executed using an API or by any other appropriate protocol.

License server 110 then authenticates the requester such as distribution point 128, checks that the end users are on the appropriate subscription list (step 508), and if so, issues licenses 116 (step 510), and delivers them to distribution point 128 for pre-packaging with protected content 108. The distribution point 128 pre-packages protected content 108 with licenses 116' and delivers them, or otherwise makes them available, to each end user 114 (step 512). Since items of protected content 108 are delivered pre-packaged with an issued license 116, users would not need to go through additional activations/procedures and wait for licenses to issue in order to access and use protected content 108 of the subscription after the initial activation. Subscription lists are maintained by subscription list manger 120 and correlated to the public keys, to verify if the user is entitled to license 116.

As noted above, it is desirable to pre-package license 116' with content 108 when it is delivered by distribution point 128 to end users 114 in order to provide a more seamless user experience. In the illustrated embodiment of Fig. 4, distribution point 128, which is merely schematically shown, may be a computer application or a storefront such as a web based, on-line store or vendor. Alternatively, distribution point 128 may be a computer application that is integrated with a mail server, license server 110, or subscription list manager 120 that maintains a subscription list. In such embodiments, maintenance of the subscription list could be as simple as storing the public keys in database 122, within a mail server directory, or a link to another storage location where public keys can be stored and managed. In an enterprise such as a group, company or entity, distribution lists may be adapted to be subscription lists. Any number of subscription lists can be managed.

In the above described manner, DRM system 100 facilitates end users access to large number of items of protected content without the need for repeated activations for each license. It should also be noted that the above discussed sequence of steps illustrate only one example workflow of how a DRM system in accordance with the present invention may be operated, one or more of the steps may take place in a different order, or approximately simultaneously.

In an embodiment where distribution point 128 is an application within a mail server, distribution point 128 may be operated to intercept incoming protected content to protect its access, and to make a request to license server 110 for a license for one or more end users 114 who are subscribers. Distribution point 128 may then pre-package the protected content and provide the pre-packaged content to the mail server workflow so that the mail server can route the protected content to the end users.

In an embodiment where distribution point 128 is integrated with subscriber list manager 120, public keys associated with end users 114 and maintained as a list of end user's identities are typically, but not necessarily, uploaded from client 106 during the activation process with activation server 102. In addition, in an enterprise, subscription list manager 120 may be integrated with a directory services system or similar system. The list of end users may also include a list of content that each of the end users subscribe to, in addition to the identity information and public keys.

Moreover, access to protected content may be through a pull model where end users pro-actively seek and use protected content such as by downloading protected content from a web site. Alternatively, access to protected content may be through a push model where end users receive protected content through e-mail, e-mail attachment, or by other mechanism.

A significant advantage of DRM system 100 is that it allows automation of the end user's access to a collection of protected content when the end user becomes a member of a designated subscription group for a particular subscription. Various end users can subscribe and unsubscribe and the subscription list may be managed by the end users themselves, or managed by another person or automated management system. Automation of the end user's access also allows the process for obtaining of a license for accessing particular protected content to be made transparent to the end user. For example, in the pull model, an end user may make downloads or otherwise access plurality of protected content without additional transaction steps to obtain required software or licenses for each of the protected content accessed after the initial activation. In the push model, the end user receives the protected content through e-mail, e-mail attachment, or by another mechanism which can be opened without any additional transaction steps after the initial activation.

It should be noted that actual delivery of the license and/or the protected content may be performed in various ways, for instance, by specialized systems such as delivery engines. Delivery engines are specialized and highly efficient entities that deliver content to a large population. For example, delivery engines may be used by a brokerage firm to deliver stock transaction confirmations by outsourcing this task to a company that specializes in low cost delivery of such documents.

Examples of specific types of subscriptions may be provided for use with the preferred embodiment are "subscribe-and-rent" subscriptions, and "subscribe-and-acquire" subscriptions. In subscribe-and-rent subscriptions, an end user is only allowed to access protected content while being an active subscriber, or based on some other condition, for example, a time period, a number of views, or until the next version of the content is made available. One example of a subscribe-and-rent subscription type is for online use of streaming media. Typically, protected content would be used on-line and once the subscription expires or a period of time lapses, the protected content, including previously accessible content, as well as unaccessed content is no longer made available to the end user. In this type of subscription usage rights, conditions, and state variables can be used to limit the manner of use in a known manner.

In subscribe-and-acquire subscriptions, end users actually acquire protected content. For instance, a certain amount or type of protected content could be acquired from a larger collection comprising a plurality of protected content. In addition, there could be preferential pricing, access, or terms can be given to a subscribing and user. In subscribe-and-acquire subscriptions, once the protected content is legitimately acquired, an end user would have the right to use it indefinitely and expiration of the subscription does not generally terminate the right to use content previously acquired. Business documents such as stock transaction confirmations are a typical example of a protected document appropriate for subscribe-and-acquire subscription.

Of course, in other implementations, both subscription types can be combined. For example, a subscribing end user may be offered a package that includes on-line access to all protected content and a predetermined number of downloads. In a music application, a subscribing end user may have on-line access to the entire catalog of music titles, but only be allowed to download one hundred titles. Of course, other permutations and subscription models are possible in implementing a subscription based DRM system and method. For instance, in another example, a subscription based DRM system and method would allow rights to a specific number, for example one hundred, downloads to be deferred, accumulated, or transferred to another person, or even returned to the subscription provider. Also, for example, acquisition could be made to persist only for the duration of certain conditions and does not literally have to be for an indefinite period.

In addition, different subscription models may be apply to different parts of the protected content. For example, a periodical may be acquired on a subscribe-and-acquire basis, but images that are part of the periodical may be acquired on a subscribe-and-rent basis and thus might expire or require additional fees for example. The license associated with the particular protected content could define the different treatment between the periodical itself and the images thereof. Once downloaded, protected content may be accessed and used by the end user off-line in the manner determined by the license associated with the protected content. With a combination of on-line and off-line subscription, many models can be constructed using the subscription based DRM system and method of the present invention.

As an example, a subscription based DRM system may be used in a storefront application. A storefront may be any on-line e-commerce site that offers protected content for sale. In this regard, distribution point 128 shown in DRM system 100 of Fig. 2 may be such a storefront. End user 114 activates client 106 and obtains public and private keys. The end user then joins a subscription list by responding to a subscription offer in the storefront and makes payment, or satisfies other conditions. Subscription list manager 120 pulls each public key and associates the public key with end user's identity. End user then attempts to download protected content such as a document that is part of a subscription collection. The storefront validates the end user's membership to the subscription through subscription list manager 120, retrieves end user's public key from subscription list manager 120, and makes a request to license server 110 for the licenses associated to the requested protected content. License server 110, after verifying authenticity of the request, issues licenses 116 to the storefront. The storefront then pre-packages the license with protected content 108 and makes it available for download by end user 114 as discussed previously. End user 114 can then download protected content 108 and transparently use protected content 108 in the manner dictated by issued license.

In another example, a subscription based DRM system and method of the present invention may be used in a delivery engine application that provides secure delivery of protected content such as documents. For instance, end users 114 may sign up as a subscriber to content 108 provided by Company A that owns or controls content 108, and activates a client via activation server 102 to obtain keys. Company A works with Company B that offers a secure digital delivery service to outsource the document delivery portion of its subscription service offering. The outsourced document delivery may be for delivery of financial statements or other type of documentation requiring protection and restricted use. Such outsourcing may be beneficial to Company A because Company B may be more efficient and cost effective in this particular function of document delivery. Company B thus serves as a "delivery engine" controls subscription list manager 102 to manage the list of end users 114 that receive documents, i.e. a subscription list which associates subscribing customers of Company A with their public key obtained during the activation stage. Of course, there could be more than one subscription list, for example a list of preferred customers, a list of specific types of customers, and the like.

When Company A has a document to deliver to its subscribers, it prepares the document and provides it to Company B for delivery. Company A then instructs Company B to deliver the document to users in one or more subscription list(s), for example, to most preferred customers. Company B sends a request to license server 110 to issue licenses 116 for each customer, i.e. user 114 in the list of most preferred customers, each customer being associated with a particular public key. Once requested licenses 116 are issued by license server 110, Company B receives licenses 116, pre-packages the documents with the licenses 116', and delivers them to the subscribing customers in the most preferred customer list. Because the documents are pre-packaged 116' with the required license, the subscribing customers need not conduct an additional transaction to use the protected content in accordance with the license 116. Thus, each end user that receives the pre-packaged license can receive and access the protected document transparently without further activations.

Another example of the subscription based DRM system and method is in an enterprise application. Distribution point 128 in such an application may be a computer application that is integrated with a mail server, or other application of the enterprise. Additionally, the enterprise application may maintain the subscription list in any appropriate manner as previously described. In this enterprise application example, end users 118 such as Person A, Person B, and Person C, are activated through activation server 122. When Person A sends a protected document to Person B and Person C, distribution point 128 intercepts the document and makes a request to license server 110 for a license 116 on behalf of Person B and Person C. Distribution point 128 then retrieves public keys for Person B and Person C and uploads the public keys to license server 110 which issues licenses 116 granting Person B and Person C rights to the protected document sent by Person A.

Once licenses 116 are received from license server 110, distribution point 128 pre-packages the protected document with the issued license 1161 and inserts it to the normal mail server workflow so that the mail server routes the protected document to Person C and Person B. Both Person B and Person C can then access and use the received document transparently when they check their respective e-mails in accordance with the issued license.

Another example of subscription based DRM system and method is a digital music store application. In such an application, a music company, for instance, an online music store, may offer a subscription to customers as users 114 where for a predetermined fee, users 114 are allowed access to unlimited (or limited) on-line streaming use of the music store's music catalog titles, and download a predetermined number of music titles.

When a subscribing user 114 seeks to access the music store's music catalog, DRM system authenticates the subscribing user 114 with activation server 102 and ensures that the user is identified in a subscription list of subscription list manager 120 before allowing access to the music catalog and the titles therein. As the user downloads various music titles as content 108, from the music store, license server 110 can keep track of the number of titles user 114 has downloaded so that if the maximum number of downloads has not been exceeded, the music store sends a request to the license server to generate licenses 116 for the selected titles. Once license server 110 issues the required licenses, the online music store pre-packages the protected title with the appropriate license 116 using a document packaging application. The user can then transparently download the selected titles from the music store.

Further, the subscription based license of the preferred embodiment permits activation prior to the existence of the content. For example, a user can subscribe to receive a live streaming event prior to the event.

It should again be understood that whereas the terms "server" and "client" are used to describe the devices for implementing the present invention in the illustrated embodiments above, these terms should be broadly understood to mean any appropriate device or devices for executing the described function.

Communication between the various devices can be accomplished through any channel, such as a local area network (LAN), the Internet, serial communications ports, and the like. The communications channels can use wireless technology, such as radio frequency or infra-red technology. The various elements of the preferred embodiment such as the various servers and databases connected thereto are segregated by function for the purpose of clarity. However, the various elements can be combined into one device or segregated in a different manner. For example, software package, and public and private key pair can be a single executable file and data files, or plural files or modules stored on the same device or on different devices. The software package can be any exchange of information that permits license activation and need not include a rendering application, a public key can be any type of identification tag or code. Further, the function of the various devices can be combined. For example, a single device can accomplish the function of license server 110 activation server 102, subscription list manager 120, and client 106. Also, the functions can be combined or segregated into any number and configuration of devices. The various components and modules have separate utility and may exist alone or in combination.

Any protocols, data types, or data structures can be used in accordance with the invention. Moreover, any appropriate means of expressing usage rights and conditions may be used in implementing the present invention. For instance, as previously noted, a rights language, e.g. a grammar such as XrML™ can be used.

While various embodiments in accordance with the present invention have been shown and described, it is understood that the invention is not limited thereto. The present invention may be changed, modified and further applied by those skilled in the art. Therefore, this invention is not limited to the detail shown and described previously, but also includes all such changes and modifications as are encompassed by the appended claims and legal equivalents.

## Claims

1. A rights management system (10; 100) for managing use of items having usage rights associated therewith, said items being protected items and said system comprising:
an activation device (20; 102) adapted to issue a software package (103) that enforces usage rights to control use of said items; said software package (103) comprising a public-private key pair associated with a subscribed user (114);
a user device (30; 106) adapted to receive said software package (103), receive a license (52; 116) having usage rights specifying a manner of use and being associated with at least one item, and allow said subscribed user (114) to access said at least one item in accordance with said license (52; 116);
means for receiving a license request for a requested item on behalf of at least one subscribed user (114); and
a license device (50; 110) adapted to issue said license (52; 116) associated with said at least one item, wherein
said software package (103) being issued to said user device (30; 106) to allow said subscribed user (114) to use said item, said subscribed user (114) being associated with said user device (30; 106), and said item being encrypted or protected such that said license and said software package are required as a security component to use said item;
said activation device (20; 102) being further adapted to provide said user device (30; 106) with a client component (60) that contains an engine for parsing or rendering protected items, said client component is installed in the client device (30; 106) after receipt at the user device (30; 106); said client component (60) being for interpreting said licenses (52); and
said system (10; 100) providing subscribed users (114) access to a plurality of said at least one item controlled by said software package, said system further comprising:
a subscription managing device (120) including a subscription list having public keys associated with subscribed users; and
a distribution point (128) requesting and receiving the license (52; 116) from the license device (50; 110); said distribution point further pre-packaging the received license (52; 116) with said at least one item; wherein
said license device (50; 110) issuing a license (52; 116) based on the identity of the subscribed user (114) by communicating with said subscription managing device (120) and verifying that the public key associated with said at least one user seeking to access and use an item is in said subscription list prior to issuing said license (52; 116); and
said pre-packaged license (116') and at least one item are delivered or made available by said distribution point (128) to said user device (30; 106) associated with said subscribed user (114); and
wherein said license request from said distribution point (128) includes a list of users and their respective public keys and a content ID for which the licenses are to be issued, and
wherein said license device (50; 110) is adapted to issue a license (52; 116) for each of said users included in said license request from said distribution point.

2. The rights management system (10; 100) of claim 1, wherein said license requests from said distribution point (128) are for multiple protected contents for which the licenses are to be issued.

3. The rights management system (10; 100) of claim 1, wherein said at least one user is a plurality of users, each of said users having a public key as an identification mechanism.

4. The rights management system (10; 100) of claim 3, wherein said subscription managing device (120) maintains a list of the identity of subscribed users via said public key associated with each of said users.

5. The rights management system (10; 100) of claim 4, wherein said at least one items is a plurality of items of protected content.

6. The rights management system (10; 100) of claim 5, wherein said plurality of items of protected content comprise at least one of a text file, an audio file, a video file, and digital multimedia files.

7. The rights management system (10; 100) of claim 1, wherein said at least one item is a plurality of items of protected content.

8. The rights management system (10; 100) of any one of claims 1 to 5, wherein said distribution point is adapted to pre-package said license (52; 116) from said license device (50; 110) with said at least one item for each user in said subscription list.

9. The rights management system (10; 100) of claim 8, wherein said distribution point is further adapted to count the number of items accessed by said at least one user.

10. The rights management system (10; 100) of claim 9, wherein said subscription managing device (120) is further adapted to remove said at least one user from said subscription list when a predetermined number of items is accessed by said at least one user.

11. The rights management system (10; 100) of anyone of claims 1 to 10, wherein said distribution point is an on-line storefront application.

12. The rights management system (10; 100) of any one of claims 1 to 11, wherein said subscription managing device (120) also includes a mail server directory.

13. A method for managing use of items having usage rights associated therewith, said items being protected items and said method comprising the steps of:
providing a software package (103) to a client device (30; 106) of at least one subscribed user, said software package (103) enforcing usage rights to control use of said items and having a public-private key pair an associated with said at least one subscribed user, said software package (103) being issued to said client device (30; 106) to allow said at least one subscribed user to use said items, said at least one subscribed user being associated with said client device (30; 106);
providing a client component (60) containing an engine for parsing or rendering protected items to said client device (30; 106), said client component being installed in the client device (30; 106) after receipt at the user device (30; 106); said client component (60) being for interpreting said licenses (52);
storing, by a subscription managing device (120), the public key of said public-private key pair associated with said at least one subscribed user in a subscription list corresponding to said at least one item; said subscription list having public keys associated with subscribed users
receiving (506), by a distribution point (128), a request from said at least one subscribed user to access said at least one item;
requesting, by said distribution point (128), the license (52; 116) from a license device (50; 110), wherein the license request from said distribution point (128) includes a list of users an their respective public keys and a content ID for which the licenses are to be issued;
issuing, for each user in the license request from said distribution point, a license (52; 116) based on the identity of the subscribed user (114) by:
verifying that said subscribed user requesting access to said at least one item is listed in said subscription list by verifying that the public key associated with said user is in said subscription list prior to issuing said license (52; 116); and
issuing, by said license device (50; 110), the license (52; 116) that grants usage rights to said subscribed user to use said at least one item if said public key associated with said user is in said subscription list;
receiving, by said distribution point (128), the license (52; 116) from a license device (50; 110);
pre-packaging, by said distribution point (128), the received license (52; 116) with said at least one item; and
delivering or making available, by said distribution point (128), said pre-packaged license (116') with said at least one item to said user device (30; 106) associated with said subscribed user (114); wherein
said at least one item is encrypted or protected such that said license and said software package are required as a security component to use said at least one item.

14. The method of claim 13, wherein said at least one item is a plurality of items of protected content adapted to be accessed by said at least one user.

15. The method of claim 14, wherein said at least one user is plural users and further comprising the step of issuing a plurality of licenses (52; 116) granting usage rights to each of said plural users to use said plurality of item of protected content.

16. The method of claim 15, further comprising the step of verifying that each of said plural uses are listed in said subscription list prior to issuing each license (52; 116) that grants usage right to use each of said plurality of protected content.

17. The method of claim 14, further comprising the step of counting the number of items of protected content used by each of said plural users.

18. The method of claim 17, further comprising the step of removing said identification mechanism associated with a user when a predetermined number of items of protected content is used by that user.

19. The method of claim 13, wherein said identification mechanism is a public key.

20. The method of claim 19, further comprising the step of verifying that a public key of a user requesting access to a particular item of protected content is listed in said subscription list prior to issuing a license (52; 116) that grants usage rights to that user to use said particular item of protected content.

21. The method of claim 13, further comprising the step of pre- packaging said issued license (52; 116) together with said at least one item for each user in the subscription list.

22. The method of any one claims 13 to 21, the method being further for subscribing a user for access to protected item, said method further comprising:
issuing a private key and a public key to users;
adding the public key of the users to the subscription list corresponding to items of protected content; and
packaging the license (52; 116) to one of the items of protected content upon receipt of a request for said one of the items for protected content and verification that the public key of a user making the request is a public key that is in the subscription list.

## Patentansprüche

1. Rechteverwaltungssystem (10; 100) zum Verwalten der Benutzung von Objekten (Items), denen Nutzungsrechte zugeordnet sind, wobei die Objekte geschützte Objekte sind und das System umfasst:
ein Aktivierungsgerät (20; 102), welches angepasst ist, eine Software-Einheit (103) auszustellen, welche Nutzungsrechte durchsetzt, um die Benutzung der Objekte zu steuern; wobei die Software-Einheit (103) ein öffentlich-privates Schlüsselpaar umfasst, welches einem beziehenden Benutzer (114) zugeordnet ist;
ein Benutzergerät (30; 106), welches angepasst ist, die Software-Einheit (103) zu empfangen, eine Lizenz (52; 116) zu empfangen, welche Nutzungsrechte hat, die eine Art der Benutzung angeben und mindestens einen Objekt zugeordnet sind und angepasst ist, dem beziehenden Benutzer (114) Zugriff auf das mindestens eine Objekt in Übereinstimmung mit der Lizenz (52; 116) zu ermöglichen;
Mittel zum Empfangen einer Lizenzanfrage für ein angefordertes Objekt im Auftrag von mindestens einem beziehenden Benutzer (114); und
ein Lizenzgerät (50; 110), welches angepasst ist, die Lizenz (52; 116) auszustellen, die dem mindestens einen Objekt zugeordnet ist, wobei
die Software-Einheit (103) für das Benutzergerät (30; 106) ausgestellt ist, um dem beziehenden Benutzer (114) die Benutzung des Objektes zu ermöglichen, wobei der beziehende Benutzer (114) dem Benutzergerät (30; 106) zugeordnet ist, und das Objekt so verschlüsselt oder geschützt ist, dass die Lizenz und die Software-Einheit als eine Sicherheitskomponente benötigt werden, um das Objekt zu benutzen;
das Aktivierungsgerät (20; 102) des Weiteren angepasst ist, dem Benutzergerät (30; 106) eine Client-Komponente (60) bereitzustellen, welche ein Mittel zum Parsen oder Rendern von geschützten Objekten enthält, wobei die Client-Komponente in dem Client-Gerät (30; 106) nach dessen Empfang bei dem Benutzergerät (30; 106) installiert wird, und wobei die Client-Komponente (60) zum Interpretieren der Lizenzen (52) ist; und
das System (10; 100) beziehenden Benutzern (114) Zugriff auf eine Vielzahl von dem mindestens einen Objekt bereitstellt, welcher durch die Software-Einheit gesteuert wird, wobei das System des Weiteren umfasst:
ein Subskriptionsverwaltungsgerät (120), welches eine Subskriptionsliste mit öffentlichen Schlüsseln umfasst, die beziehenden Benutzern zugeordnet sind; und
eine Verteilungsstelle (128), welche die Lizenzen (52; 116) anfordert und von dem Lizenzgerät (50; 110) empfängt; wobei die Verteilungsstelle des Weiteren die empfangenen Lizenzen (52; 116) mit dem mindestens einem Objekt vor-verpackt; wobei
das Lizenzgerät (50; 110) eine Lizenz (52; 116) basierend auf der Identität des beziehenden Benutzers (114) ausstellt, indem vor dem Ausstellen der Lizenz (52; 116) mit dem Subskriptionsverwaltungsgerät (120) kommuniziert wird und verifiziert wird, dass der öffentliche Schlüssel, der dem mindestens einen Benutzer, welcher beabsichtigt, auf ein Objekt zuzugreifen und das Objekt zu benutzen, zugeordnet ist, in der Subskriptionsliste enthalten ist; und
die vor-verpackte Lizenz (116') und das mindestens eine Objekt von der Verteilungsstelle (128) an das Benutzergerät (30; 106), welches dem beziehenden Benutzer (114) zugeordnet ist, bereitgestellt oder zugänglich gemacht wird; und
wobei die Lizenzanfrage von der Verteilungsstelle (128) eine Liste von Benutzern und deren zugehöriger öffentlicher Schlüssel und eine Content-ID, für die die Lizenzen auszustellen sind, enthält,
wobei das Lizenzgerät (50; 110) angepasst ist, eine Lizenz (52; 116) für jeden von der Lizenzanfrage der Verteilungsstelle umfassten Benutzer auszustellen.

2. Rechteverwaltungssystem (10; 100) gemäß Anspruch 1, wobei die Lizenzanfragen von der Verteilungsstelle (128) für mehrere geschützte Inhalte sind, für die die Lizenzen auszustellen sind.

3. Rechteverwaltungssystem (10; 100) gemäß Anspruch 1, wobei der mindestens eine Benutzer eine Vielzahl von Benutzern ist und jeder der Benutzer einen öffentlichen Schlüssel als einen Identifikationsmechanismus besitzt.

4. Rechteverwaltungssystem (10; 100) gemäß Anspruch 3, wobei das Subskriptionsverwaltungsgerät (120) eine Liste von Identitäten von beziehenden Benutzern mittels des öffentlichen Schlüssels, der zu jedem der Benutzer zugeordnet ist, verwaltet.

5. Rechteverwaltungssystem (10; 100) gemäß Anspruch 4, wobei das mindestens eine Objekt eine Vielzahl von Objekten mit geschütztem Inhalt ist.

6. Rechteverwaltungssystem (10; 100) gemäß Anspruch 5, wobei die Vielzahl von Objekten mit geschütztem Inhalt mindestens eines der folgenden umfasst: eine Textdatei, eine Audiodatei, eine Videodatei und eine digitale Multimediadatei.

7. Rechteverwaltungssystem (10; 100) gemäß Anspruch 1, wobei das mindestens eine Objekt eine Vielzahl von Objekten mit geschütztem Inhalt ist.

8. Rechteverwaltungssystem (10; 100) gemäß einem der Ansprüche 1 bis 5, wobei die Verteilungsstelle angepasst ist, die Lizenz (52; 116) von dem Lizenzgerät (50; 110) mit dem mindestens einen Objekt für jeden Benutzer in der Subskriptionsliste vorzuverpacken.

9. Rechteverwaltungssystem (10; 100) gemäß Anspruch 8, wobei die Verteilungsstelle des Weiteren angepasst ist, die Anzahl der Objekte, auf die der mindestens eine Benutzer zugreift, zu zählen.

10. Rechteverwaltungssystem (10; 100) gemäß Anspruch 9, wobei das Subskriptionsverwaltungsgerät (120) des Weiteren angepasst ist, den mindestens einen Benutzer von der Subskriptionsliste zu entfernen, wenn von dem mindestens einen Benutzer auf eine vorbestimmte Anzahl von Objekten zugegriffen wurde.

11. Rechteverwaltungssystem (10; 100) gemäß einem der Ansprüche 1 bis 10, wobei die Verteilungsstelle eine Online-Storefront-Applikation ist.

12. Rechteverwaltungssystem (10; 100) gemäß einem der Ansprüche 1 bis 11, wobei das Subskriptionsverwaltungsgerät (120) des Weiteren ein Mail-Server-Verzeichnis enthält.

13. Verfahren zum Verwalten der Benutzung von Objekten (Items), denen Nutzungsrechte zugeordnet sind, wobei die Objekte geschützte Objekte sind und das Verfahren die folgenden Schritte umfasst:
Bereitstellen einer Software-Einheit (103) für ein Client-Gerät (30; 106) von mindestens einem beziehenden Benutzer, wobei die Software-Einheit (103) Nutzungsrechte durchsetzt, um die Benutzung der Objekte zu steuern und wobei die Software-Einheit ein öffentlich-privates Schlüsselpaar besitzt, welches dem mindestens einen beziehenden Benutzer zugeordnet ist, wobei die Software-Einheit (103) für das Benutzergerät (30; 106) ausgestellt ist, um dem mindestens einen beziehenden Benutzer (114) die Benutzung des Objektes zu ermöglichen, wobei der mindestens eine beziehende Benutzer (114) dem Benutzergerät (30; 106) zugeordnet ist;
Bereitstellen einer Client-Komponente (60) für das Client-Gerät (30; 106), welche ein Mittel zum Parsen oder Rendern von geschützten Objekten enthält, wobei die Client-Komponente in dem Client-Gerät (30; 106) nach dessen Empfang bei dem Benutzergerät (30; 106) installiert wird; und wobei die Client-Komponente (60) zum Interpretieren der Lizenzen (52) ist;
Speichern, durch ein Subskriptionsverwaltungsgerät (120), des öffentlichen Schlüssels des öffentlich-privaten Schlüsselpaars, welches dem mindestens einen beziehenden Benutzer zugeordnet ist, in einer Subskriptionsliste, die dem mindestens einen Objekt zugeordnet ist; wobei die Subskriptionsliste öffentliche Schlüssel enthält, die den beziehenden Benutzern zugeordnet sind;
Empfangen (506), bei einer Verteilungsstelle (128), einer Anfrage von dem mindestens einen beziehenden Benutzer, um auf das mindestens eine Objekt zuzugreifen;
Anfordern, durch die Verteilungsstelle (128), der Lizenz (52; 116) von einem Lizenzgerät (50; 110), wobei die Lizenzanfrage von der Verteilungsstelle (128) eine Liste von Benutzern und deren zugehöriger öffentlicher Schlüssel und eine Content-ID, für die die Lizenzen auszustellen sind, enthält;
Ausstellen einer Lizenz (52; 116) für jeden für jeden von der Lizenzanfrage der Verteilungsstelle umfassten Benutzer basierend auf der Identität des beziehenden Benutzers (114) mittels:
Verifizieren, bevor die Lizenz (52; 116) ausgestellt wird, dass der beziehende Benutzer, welcher Zugriff zu dem mindestens einen Objekt anfordert, in der Subskriptionsliste aufgelistet ist, indem verifiziert wird, dass der öffentliche Schlüssel, welcher dem Benutzer zugeordnet ist, in der Subskriptionsliste enthalten ist; und
Ausstellen der Lizenz (52; 116), welche Nutzungsrechte zur Benutzung des mindestens einen Objekts für den beziehenden Benutzer gewährt, durch das Lizenzgerät (50; 110), falls der öffentliche Schlüssel, der Benutzer zugeordnet ist, in der Subskriptionsliste enthalten ist;
Empfangen der Lizenz (51; 116) von dem Lizenzgerät (50; 110) bei der Verteilungsstelle (128);
Vor-verpacken der empfangenen Lizenz (52; 116) mit dem mindestens einen Objekt durch die Verteilungsstelle (128); und
Bereitstellen oder zugänglich machen, durch die Verteilungsstelle (128), der vorverpackten Lizenz (116') mit dem mindestens einen Objekt für das Benutzergerät (30; 106), welches dem beziehenden Benutzer (114) zugeordnet ist; wobei das mindestens eine Objekt so verschlüsselt oder geschützt ist, dass die Lizenz und die Software-Einheit als eine Sicherheitskomponente benötigt werden, um das mindestens eine Objekt zu benutzen.

14. Verfahren gemäß Anspruch 13, wobei das mindestens eine Objekt eine Vielzahl von Objekten mit geschütztem Inhalt ist, welche so angepasst sind, dass der mindestens eine Benutzer auf diese zugreifen kann.

15. Verfahren gemäß Anspruch 14, wobei der mindestens eine Benutzer eine Vielzahl von Benutzern ist und das Verfahren des Weiteren einen Schritt des Ausstellens einer Vielzahl von Lizenzen (52; 116) umfasst, welche Nutzungsrechte zur Benutzung der Vielzahl von Objekten mit geschütztem Inhalt für jeden aus der Vielzahl von Benutzern gewährt.

16. Verfahren gemäß Anspruch 15, welches des Weiteren einen Schritt des Verifizierens umfasst, dass jeder aus der Vielzahl von Benutzern in der Subskriptionsliste aufgelistet ist, bevor jede Lizenz (52; 116), welche Nutzungsrechte zur Benutzung jedes der Vielzahl von geschützten Inhalten gewährt, ausgestellt wird.

17. Verfahren gemäß Anspruch 14, welches des Weiteren einen Schritt des Zählens der Anzahl von Objekten mit geschütztem Inhalt, welche von jedem aus der Vielzahl von Benutzern benutzt werden, umfasst.

18. Verfahren gemäß Anspruch 17, welches des Weiteren den Schritt des Entfernens des Identifizierungsmechanismus, welcher dem Benutzer zugeordnet ist, wenn eine vorbestimmte Anzahl von Objekten mit geschütztem Inhalt von dem Benutzer benutzt wurde, umfasst.

19. Verfahren gemäß Anspruch 13, wobei der Identifizierungsmechanismus ein öffentlicher Schlüssel ist.

20. Verfahren gemäß Anspruch 19, welches des Weiteren den Schritt des Verifizierens umfasst, dass ein öffentlicher Schlüssel eines Benutzers, der Zugriff auf ein bestimmtes Objekt mit geschütztem Inhalt anfordert, in der Subskriptionsliste aufgelistet ist, bevor eine Lizenz (51; 116) ausgestellt wird, welche Nutzungsrechte zur Benutzung des bestimmten Objekts mit geschütztem Inhalt für den Benutzer gewährt.

21. Verfahren gemäß Anspruch 13, welches des Weiteren den Schritt des Vorverpackens der ausgestellten Lizenz (52; 116) zusammen mit dem mindestens einen Objekt für jeden Benutzer in der Subskriptionsliste umfasst.

22. Verfahren gemäß einem der Ansprüche 13 bis 21, wobei das Verfahren des Weiteren zum Abonnieren von Zugriff auf geschützte Objekte für einen Benutzer ist, wobei das Verfahren des Weiteren umfasst:
Ausstellen eines privaten Schlüssels und eines öffentlichen Schlüssels für Benutzer;
Hinzufügen des öffentlichen Schlüssels der Benutzer zu der Subskriptionsliste, welche zu Objekten mit geschütztem Inhalt zugeordnet ist; und
Verpacken der Lizenz (52; 116) zu einem der Objekte mit geschütztem Inhalt, nachdem eine Anfrage für das eine der Objekte mit geschütztem Inhalt empfangen wurde und verifiziert wurde, dass der öffentliche Schlüssel eines Benutzers, welcher die Anfrage gestellt hat, ein öffentlicher Schlüssel aus der Subskriptionsliste ist.

## Revendications

1. Système de gestion des droits (10 ; 100) pour gérer l'utilisation d'articles ayant des droits d'usage qui y sont associés, lesdits articles étant des articles protégés, ledit système comprenant :
un dispositif d'activation (20 ; 102) adapté pour délivrer un progiciel (103) qui fait respecter des droits d'usage pour contrôler l'utilisation desdits articles ; ledit progiciel (103) comprenant une paire clé publique-clé privée associée à un utilisateur abonné (114) ;
un dispositif d'utilisateur (30 ; 106) adapté pour recevoir ledit progiciel (103), recevoir une licence (52 ;116) ayant des droits d'usage spécifiant une manière d'utilisation et étant associée à au moins un article, et permettre audit utilisateur abonné (114) 15 d'accéder audit au moins un article conformément à ladite licence (52 ; 116) ;
des moyens pour recevoir une demande de licence pour un article demandé de la part d'au moins un utilisateur abonné (114) ; et
un dispositif de licence (50 ; 110) adapté pour délivrer ladite licence (52 ; 116) associée audit au moins un article,
dans lequel :
ledit progiciel (103) est délivré audit dispositif d'utilisateur (30 ; 106) pour permettre audit utilisateur abonné (114) d'utiliser ledit article, ledit utilisateur abonné (114) étant associé audit dispositif d'utilisateur (30 ; 106), et ledit article étant crypté ou protégé de telle sorte que ladite licence et ledit progiciel soient requis en tant que composant de sécurité pour utiliser ledit article ;
ledit dispositif d'activation (20 ; 102) est en outre adapté pour fournir audit dispositif d'utilisateur (30 ; 106) un composant client (60) qui contient un moteur pour analyser ou rendre des articles protégés, ledit composant client est installé dans le dispositif client (30 ; 106) après réception au niveau du dispositif d'utilisateur (30 ; 106); ledit composant client (60) étant destiné à interpréter lesdites licences (52) ; et
ledit système (10 ; 100) fournit aux utilisateurs abonnés (114) l'accès à une pluralité dudit au moins un article contrôlé par ledit progiciel, ledit système comprenant en outre :
un dispositif de gestion d'abonnement (120) comprenant une liste d'abonnement ayant des clés publiques associées à des utilisateurs abonnés ; et
un point de distribution (128) demandant et recevant la licence (52 ; 116) du dispositif de licence (50 ; 110) ; ledit dispositif de distribution préemballant en outre la licence reçue (52 ; 116) avec ledit au moins un article ; dans lequel
ledit dispositif de licence (50 ; 110) délivrant une licence (52 ; 116) basée sur l'identité de l'utilisateur abonné (114) en communiquant avec ledit dispositif de gestion d'abonnement (120) et en vérifiant que la clé publique associée audit au moins un utilisateur cherchant à accéder à et à utiliser un article est dans ladite liste d'abonnement avant de délivrer ladite licence (52 ; 116); et
ladite licence préemballée (116') et au moins un article sont remis ou rendus disponibles par ledit point de distribution (128) audit dispositif d'utilisateur (30 ; 106) associé audit utilisateur abonné (114); et
dans lequel ladite demande de licence depuis ledit point de distribution (128) comprend une liste d'utilisateurs et leurs clés publiques respectives et un ID de contenu pour lequel les licences doivent être délivrées, et
dans lequel ledit dispositif de licence (50 ; 110) est adapté pour délivrer une licence (52 ; 116) pour chacun desdits utilisateurs inclus dans ladite demande de licence depuis ledit point de distribution.

2. Système de gestion des droits (10 ; 100) selon la revendication 1, dans lequel lesdites demandes de licence depuis ledit point de distribution (128) sont pour de multiples contenus protégés pour lesquels les licences doivent être délivrées.

3. Système de gestion des droits (10 ; 100) selon la revendication 1, dans lequel ledit au moins un utilisateur est une pluralité d'utilisateurs, chacun desdits utilisateurs ayant une clé publique comme mécanisme d'identification.

4. Système de gestion des droits (10 ; 100) selon la revendication 3, dans lequel ledit dispositif de gestion d'abonnement (120) maintient une liste de l'identité d'utilisateurs abonnés vialadite clé publique associée à chacun desdits utilisateurs.

5. Système de gestion des droits (10 ; 100) selon la revendication 4, dans lequel ledit au moins un article est une pluralité d'articles de contenu protégé.

6. Système de gestion des droits (10 ; 100) selon la revendication 5, dans lequel ladite pluralité d'articles de contenu protégé comprend au moins un d'un fichier texte, d'un fichier audio, d'un fichier vidéo, et de fichiers multimédias numériques.

7. Système de gestion des droits (10 ; 100) selon la revendication 1, dans lequel ledit au moins un article est une pluralité d'articles de contenu protégé.

8. Système de gestion des droits (10 ; 100) selon l'une quelconque des revendications 1 à 5, dans lequel ledit point de distribution est adapté pour préemballer ladite licence (52 ; 116) depuis ledit dispositif de licence (50 ; 110) avec ledit au moins un article pour chaque utilisateur dans ladite liste d'abonnement.

9. Système de gestion des droits (10 ; 100) selon La revendication 8, dans lequel ledit point de distribution est en outre adapté pour compter le nombre d'articles accédés par ledit au moins un utilisateur.

10. Système de gestion des droits (10 ; 100) selon la revendication 9, dans lequel ledit dispositif de gestion d'abonnement (120) est en outre adapté pour supprimer ledit au moins un utilisateur de ladite liste d'abonnement lorsqu'un nombre prédéterminé d'articles est accédé par ledit au moins un utilisateur.

11. Système de gestion des droits (10; 100) selon l'une quelconque des revendications 1 à 10, dans lequel ledit point de distribution est une application de vitrine en ligne.

12. Système de gestion des droits (10; 100) selon l'une quelconque des revendications 1 à 11, dans lequel ledit dispositif de gestion d'abonnement (120) comprend également un répertoire de serveurs de courrier.

13. Procédé pour gérer l'utilisation d'articles ayant des droits d'usage qui y sont associés, lesdits articles étant des articles protégés, ledit procédé comprenant les étapes consistant à :
fournir un progiciel (103) à un dispositif client (30 ; 106) d'au moins un utilisateur abonné, ledit progiciel (103) faisant respecter des droits d'usage 10 pour contrôler l'utilisation desdits articles et ayant une paire clé publique-clé privée associée à au moins un utilisateur abonné, ledit progiciel (103) étant délivré audit dispositif d'utilisateur (30 ; 106) pour permettre audit au moins un utilisateur abonné d'utiliser lesdits articles, ladit au moins un utilisateur abonné étant associé audit dispositif d'utilisateur (30 ; 106) ;
fournir un composant client (60) contenant un moteur pour analyser ou rendre des articles protégés audit dispositif client (30 ; 106), ledit composant client étant installé dans le dispositif client (30 ; 106) après réception au niveau du dispositif d'utilisateur (30 ;106) ; ledit composant client (60) étant destiné à interpréter lesdites licences (52) ;
stocker, par un dispositif de gestion d'abonnement (120), la clé publique de ladite paire clé publique-clé privée associée audit au moins un utilisateur abonné dans une liste d'abonnement correspondant audit au moins un article ; ladite liste d'abonnement ayant des clés publiques associées à des utilisateurs abonnés ;
recevoir (506), par un point de distribution (128), une demande provenant dudit au moins un utilisateur abonné pour accéder audit au moins un article ;
demander, par ledit point de distribution (128), 30 la licence (52 ; 116) à un dispositif de licence (50 ; 110), la demande de licence depuis ledit point de distribution (128) incluant une liste d'utilisateurs et leurs clés publiques respectives et un ID de contenu pour lequel les licences doivent être délivrées ;
délivrer, pour chaque utilisateur dans la demande de licence depuis ledit point de distribution, une licence (52 ; 116) basée sur l'identité de l'utilisateur abonné (114) en :
vérifiant que ledit utilisateur abonné demandant l'accès audit au moins un article est listé 5 dans ladite liste d'abonnement en vérifiant que la clé publique associée audit utilisateur est dans ladite liste d'abonnement avant de délivrer ladite licence (52 ; 116) ; et
délivrant, par ledit dispositif de licence (50 ; 110), la licence (52 ; 116) qui octroie des droits d'usage audit utilisateur abonné pour utiliser ledit au moins un article si ladite clé publique associée audit utilisateur est dans ladite liste d'abonnement ;
recevoir, par ledit point de distribution (128), la licence (52 ; 116) d'un dispositif de licence (50 ; 110) ;
préemballer, par ledit point de distribution (128), la licence reçue (52 ; 116) avec ledit au moins un article ; et
remettre ou rendre disponible, par ledit point de distribution (128), ladite licence préemballée (116') avec ledit au moins un article audit dispositif d'utilisateur (30 ; 106) associé audit utilisateur abonné (114);
dans lequel ledit au moins un article est crypté ou protégé de telle sorte que ladite licence et ledit progiciel soient requis en tant que composant de sécurité pour utiliser ledit au moins un article.

14. Procédé selon la revendication 13, dans lequel ledit au moins un article est une pluralité d'articles de contenu protégé adaptée pour être accédée par ledit au moins un utilisateur.

15. Procédé selon la revendication 14, dans lequel ledit au moins un utilisateur est une pluralité d'utilisateurs et comprenant en outre l'étape consistant à délivrer une pluralité de licences (52 ; 116) octroyant des droits d'usage à chacun de ladite pluralité d'utilisateurs pour utiliser ladite pluralité d'articles de contenu protégé.

16. Procédé selon la revendication 15, comprenant en outre l'étape consistant à vérifier que chacun de ladite pluralité d'utilisateurs est listé dans ladite liste d'abonnement avant de délivrer chaque licence (52 ; 116) qui octroie des droits d'usage pour utiliser chacun de ladite pluralité d'articles de contenu protégé.

17. Procédé selon la revendication 14, comprenant en outre l'étape consistant à compter le nombre d'articles de contenu protégé utilisés par chacun de ladite pluralité d'utilisateurs.

18. Procédé selon la revendication 17, comprenant en outre l'étape consistant à supprimer ledit mécanisme d'identification associé à un utilisateur lorsqu'un nombre prédéterminé d'articles de contenu protégé est utilisé par cet utilisateur.

19. Procédé selon la revendication 13, dans lequel ledit mécanisme d'identification est une clé publique.

20. Procédé selon la revendication 19, comprenant en outre l'étape consistant à vérifier qu'une clé publique d'un utilisateur demandant l'accès à un article particulier de contenu protéqé est listée dans ladite liste d'abonnement avant de délivrer une licence (52 ; 116) qui octroie des droits d'usage à cet utilisateur pour utiliser ledit article particulier de contenu protégé.

21. Procédé selon la revendication 13, comprenant en outre l'étape consistant à préemballer ladite licence délivrée (52 ; 116) conjointement avec ledit au moins un article pour chaque utilisateur dans la liste d'abonnement.

22. Procédé selon l'une quelconque des revendications 13 à 21, le procédé étant en outre destiné à abonner un utilisateur pour l'accès à un article protégé, ledit procédé comprenant en outre :
la délivrance d'une clé privée et d'une clé publique à des utilisateurs ;
l'ajout de la clé publique des utilisateurs à la liste d'abonnement correspondant à des articles de contenu protégé ; et
l'emballage de la licence (52 ; 116) à un des articles de contenu protégé à la réception d'une demande pour ledit au moins un des articles de contenu protégé et la vérification que la clé publique d'un utilisateur faisant la demande est une clé publique qui est dans la liste d'abonnement.
